# EUROPÄISCHE PATENTSCHRIFT

(11) **EP 2 925 608 B1**
(45) Veröffentlichungstag und Bekanntmachung des Hinweises auf die Patenterteilung: **23.05.2018**
(21) Anmeldenummer: 13795750.2
(22) Anmeldetag: 25.11.2013
(51) Int. Cl.: B64D 11/00

(54) **SITZANBAUVORRICHTUNG**
SEAT ATTACHMENT DEVICE
DISPOSITIF DE MONTAGE SUR UN SIÈGE

(30) Priorität: 27.11.2012 DE 102012111475
(43) Veröffentlichungstag der Anmeldung: 07.10.2015
(73) Patentinhaber: Recaro Aircraft Seating GmbH & Co. KG, 74523 Schwäbisch Hall (DE)
(72) Erfinder: HÄUSSER, Markus, 74374 Zaberfeld-Leonbronn (DE)
(74) Vertreter: Daub, Thomas
(86) Internationale Anmeldenummer: PCT/EP2013/074629
(87) Internationale Veröffentlichungsnummer: WO 2014/082966

(56) Entgegenhaltungen:
- EP-A1- 0 813 340
- DE-A1- 4 119 810

## Beschreibung

### Stand der Technik

Die Erfindung betrifft eine Sitzanbauvorrichtung nach dem Oberbegriff des Anspruchs 1.

Es ist bereits eine Sitzanbauvorrichtung mit zumindest einer Tragarmeinheit, die zumindest ein erstes Tragarmelement, zumindest ein zweites Tragarmelement und zumindest eine Gelenkeinheit aufweist, die dazu vorgesehen ist, das erste Tragarmelement schwenkbar um zumindest eine Gelenkachse zu lagern, vorgeschlagen worden. Ein Beispiel vom Stand der Technik ist in EP 0 813 340 A1 offenbart. Die Aufgabe der Erfindung besteht insbesondere darin, eine gattungsgemäße Vorrichtung mit verbesserten Eigenschaften hinsichtlich eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung betrifft eine Sitzaufbauvorrichtung mit den Merkmalen des Anspruchs 1 und eine Methode nach Anspruch 13. Die Erfindung geht aus von einer Sitzanbauvorrichtung mit zumindest einer Tragarmeinheit, die zumindest ein erstes Tragarmelement, zumindest ein zweites Tragarmelement und zumindest eine Gelenkeinheit aufweist, die dazu vorgesehen ist, das erste Tragarmelement schwenkbar um zumindest eine Gelenkachse zu lagern.

Es wird vorgeschlagen, dass die Tragarmeinheit zumindest eine Ausweichbewegungseinheit aufweist, die zur Erzeugung einer Ausweichbewegung des zweiten Tragarmelements relativ zum ersten Tragarmelement dazu vorgesehen ist, das erste Tragarmelement und das zweite Tragarmelement bewegungstechnisch miteinander zu koppeln. Insbesondere weist die Tragarmeinheit eine zumindest im Wesentlichen längliche Form auf. Insbesondere weist die Tragarmeinheit eine Tragarmeinheitenlängserstreckung von mehr als 15 cm, insbesondere von mehr als 20 und vorteilhaft von mehr als 25 cm auf. Insbesondere ist die Tragarmeinheit in zumindest einem Betriebszustand dazu vorgesehen, eine Gewichtskraft zumindest eines Gegenstands an zumindest ein Sitzelement zu übertragen. Vorteilhaft ist die Tragarmeinheit dazu vorgesehen, den Gegenstand an das Sitzelement, vorzugsweise schwenkbar, anzubinden. Insbesondere ist die Tragarmeinheit dazu vorgesehen, in dem Betriebszustand den Gegenstand zu dem Sitzelement zu beabstanden. Unter einem "Tragarmelement" soll insbesondere ein Element mit einer zumindest im Wesentlichen länglichen Form verstanden werden. Unter einem "ersten Tragarmelement" soll insbesondere ein Tragarmelement verstanden werden, das dazu vorgesehen ist, die Gelenkeinheit und das zweite Tragarmelement miteinander zu verbinden. Vorteilhaft weist das erste Tragarmelement, insbesondere über mehr als 80 %, vorteilhaft über mehr als 90 % und vorzugsweise über mehr als 95 % einer Tragarmelementlängserstreckung des ersten Tragarmelements, zumindest einen Hohlraum auf. Vorteilhaft ist das erste Tragarmelement dazu vorgesehen, in dem Betriebszustand die Ausweichbewegungseinheit zumindest teilweise, insbesondere zu einem Anteil von mehr als 40 %, vorteilhaft von mehr als 50 % und vorzugsweise von mehr als 60 % einer Ausweichbewegungseinheitenlängserstreckung, aufzunehmen. Insbesondere ist das zweite Tragarmelement schwenkbar mit dem ersten Tragarmelement verbunden. Unter einem "zweiten Tragarmelement" soll insbesondere ein Tragarmelement verstanden werden, das dazu vorgesehen ist, das erste Tragarmelement und den Gegenstand miteinander zu verbinden. Vorteilhaft weist das zweite Tragarmelement, insbesondere über mehr als 20 %, vorteilhaft über mehr als 30 % und vorzugsweise über mehr als 35 % einer Tragarmelementlängserstreckung des zweiten Tragarmelements, zumindest einen Hohlraum auf. Vorteilhaft ist das zweite Tragarmelement dazu vorgesehen, in dem Betriebszustand die Ausweichbewegungseinheit zumindest teilweise, insbesondere zu einem Anteil von mehr als 3 %, vorteilhaft von mehr als 5 % und vorzugsweise von mehr als 7 % einer Ausweichbewegungseinheitenlängserstreckung, aufzunehmen. Insbesondere ist der Gegenstand schwenkbar mit dem zweiten Tragarmelement verbunden. Unter einer "Gelenkeinheit" soll insbesondere eine Einheit mit zumindest einer Gelenkachse verstanden werden. Insbesondere ist die Gelenkeinheit dazu vorgesehen, zumindest das erste Tragarmelement schwenkbar, insbesondere beweglich, zu lagern. Vorteilhaft weist die Gelenkeinheit zumindest einen Hohlraum auf. Vorteilhaft ist die Gelenkeinheit dazu vorgesehen, in dem Betriebszustand die Ausweichbewegungseinheit zumindest teilweise, insbesondere zu einem Anteil von mehr als 3 %, vorteilhaft von mehr als 5 % und vorzugsweise von mehr als 7 % einer Ausweichbewegungseinheitenlängserstreckung, aufzunehmen. Unter einer "Gelenkachse" soll insbesondere eine Gerade verstanden werden, um die in dem Betriebszustand zumindest eine Bewegung, vorzugsweise eine Schwenkbewegung, des ersten Tragarmelements erfolgt. Unter einer "zumindest im Wesentlichen länglichen" Form zumindest eines Bauteils, insbesondere der Tragarmeinheit und/oder des Tragarmelements, soll insbesondere eine Form verstanden werden, die bei einer Projektion des Bauteils in zumindest eine Ebene eine Fläche eines kleinsten, das Bauteil umschließenden Rechtecks zu einem Anteil von mehr als 80 %, insbesondere von mehr als 90 % und vorzugsweise von mehr als 95 % eines Betrags der Fläche des Rechtecks ausfüllt. Insbesondere füllt ein größtes innerhalb des Bauteils angeordnetes Rechteck bei Betrachtung der Projektion des Bauteils in die Ebene eine Fläche des Bauteils zu mehr als 80 %, insbesondere zu mehr als 90 % und vorzugsweise zu mehr als 95 % eines Betrags der Fläche des Bauteils aus. Unter einer "Ausweichbewegungseinheitenlängserstreckung" zumindest einer Ausweichbewegungseinheit soll insbesondere eine Erstreckung einer langen Seite eines kleinsten gedachten die Ausweichbewegungseinheit umschließenden Rechtecks verstanden werden. Unter einer "Tragarmeinheitenlängserstreckung" zumindest einer Tragarmeinheit soll insbesondere eine Erstreckung einer langen Seite eines kleinsten gedachten die Tragarmeinheit umschließenden Rechtecks verstanden werden. Unter einer "Tragarmelementlängserstreckung" zumindest eines Tragarmelements soll insbesondere eine Erstreckung einer langen Seite eines kleinsten gedachten das Tragarmelement umschließenden Rechtecks verstanden werden. Unter einem "Hohlraum" soll insbesondere ein Raum verstanden werden, der von zumindest einem Bauteil, insbesondere von zumindest einem Tragarmelement und/oder zumindest einer Gelenkeinheit, begrenzt ist und zwar insbesondere von zumindest drei und vorzugsweise von zumindest vier Seiten. Insbesondere weist der Hohlraum ein Hohlraumvolumen auf, welches durch das Bauteil von den Seiten begrenzt ist. Unter einer "Ausweichbewegungseinheit" soll insbesondere eine Einheit verstanden werden, die dazu vorgesehen ist, die Ausweichbewegung des zweiten Tragarmelements relativ zu dem ersten Tragarmelement zu bewirken. Vorzugsweise ist die Ausweichbewegungseinheit dazu vorgesehen, in zumindest einer Bewegungsstellung der Tragarmeinheit zumindest einen Ausweichwinkel zwischen dem ersten Tragarmelement und dem zweiten Tragarmelement zu bewirken. Insbesondere ist die Ausweichbewegungseinheit dazu vorgesehen, das erste Tragarmelement und das zweite Tragarmelement in Abhängigkeit von einer einzigen auf das erste Tragarmelement einwirkenden, vorteilhaft äußeren, Bedienkraft bewegungstechnisch miteinander zu koppeln. Insbesondere ist die Ausweichbewegungseinheit dazu vorgesehen, das erste Tragarmelement und das zweite Tragarmelement bei einer Abwesenheit einer auf das zweite Tragarmelement einwirkenden Bedienkraft bewegungstechnisch miteinander zu koppeln. Die Ausweichbewegungseinheit ist dazu vorgesehen, bei einer Abwesenheit einer auf das zweite Tragarmelement einwirkenden Bedienkraft die Ausweichbewegung des zweiten Tragarmelements zu erzeugen. Vorzugsweise ist zur Erzeugung der Ausweichbewegung eine einzige auf das erste Tragarmelement einwirkende Bedienkraft ausreichend. Vorzugsweise ist die Ausweichbewegungseinheit dazu vorgesehen, die bewegungstechnische Kopplung des ersten Tragarmelements und des zweiten Tragarmelements mittels zumindest einer mechanischen Kopplung zu bewirken. Alternativ ist denkbar, dass die Ausweichbewegungseinheit dazu vorgesehen ist, die bewegungstechnische Kopplung mittels zumindest einer elektrischen, pneumatischen und/oder hydraulischen Kopplung zu bewirken. Zudem sind weitere, einem Fachmann als sinnvoll erscheinende Kopplungen möglich. Unter einer auf zumindest ein Element einwirkenden "Bedienkraft" soll insbesondere eine von außen auf das Element einwirkende Kraft verstanden werden. Insbesondere ist die Bedienkraft als eine von zumindest einer Person, insbesondere von einem Passagier, ausgeübte Kraft ausgebildet. Unter der Wendung, das erste Tragarmelement und das zweite Tragarmelement "bewegungstechnisch miteinander zu koppeln", soll insbesondere verstanden werden, dass eine Bewegung eines der beiden Tragarmelemente von einer Bewegung des weiteren der beiden Tragarmelemente abhängig ist. Insbesondere ist eine Bewegung des zweiten Tragarmelements an eine Bewegung des ersten Tragarmelements gekoppelt, insbesondere von der Bewegung des ersten Tragarmelements abhängig. Unter einer "Ausweichbewegung" soll insbesondere eine Bewegung des zweiten Tragarmelements verstanden werden, mittels der zumindest eine Kollision des Gegenstands mit zumindest einem Objekt, insbesondere einer Aufständerfläche und/oder einer Aufständereinheit eines Sitzes, verhinderbar, insbesondere vermeidbar, ist. Vorzugsweise ist die Ausweichbewegungseinheit dazu vorgesehen, mittels der Ausweichbewegung eine Kollision des Gegenstands mit dem Objekt zu verhindern, insbesondere zu vermeiden. Insbesondere weicht eine aufgrund der Ausweichbewegung durchlaufene Bahnkurve des zweiten Tragarmelements von einer Bahnkurve ab, die ein mit dem ersten Tragarmelement starr verbundenes, zweites Tragarmelement durchlaufen würde. Unter einem "Ausweichwinkel" soll insbesondere ein Winkel zwischen dem ersten Tragarmelement und dem zweiten Tragarmelement verstanden werden. Insbesondere ist der Ausweichwinkel als ein kleinster Winkel bei einem Schnitt einer gedachten Verlängerung, insbesondere einer Tragarmelementlängserstreckung, des ersten Tragarmelements und einer gedachten Verlängerung, insbesondere einer Tragarmelementlängserstreckung, des zweiten Tragarmelements ausgebildet. Vorteilhaft nimmt ein Betrag des Ausweichwinkels einen Wert von mehr als 5°, insbesondere von mehr als 10°, vorteilhaft von mehr als 15° und vorzugsweise von mehr als 18° an. Insbesondere nimmt der Betrag des Ausweichwinkels einen Wert von vorzugsweise weniger als 90°, vortelhaft von weniger als 80° und insbesondere von weniger als 70° an. Unter einem "Betriebszustand" soll insbesondere ein, vorteilhaft an zumindest einem Sitz, montierter, funktionstüchtiger Zustand verstanden werden. Unter "vorgesehen" soll insbesondere speziell ausgelegt und/oder ausgestattet verstanden werden.

Durch eine erfindungsgemäße Ausgestaltung kann vorteilhaft ein hoher Komfort für einen Passagier erreicht werden. Durch die Erzeugung der Ausweichbewegung des zweiten Tragarmelements relativ zum ersten Tragarmelement mittels der Ausweichbewegungseinheit kann vorteilhaft eine Kollision des Gegenstands mit dem Objekt vermieden werden. Zudem kann vorteilhaft die Tragarmeinheit mittels einer einzigen Bewegung, insbesondere eine einzige Bedienkraft, von dem Passagier von einer Verstaustellung in eine Gebrauchsstellung gebracht werden, wodurch insbesondere eine weitere Bewegung, insbesondere eine weitere Bedienkraft, vermieden und damit ein hoher Komfort erreicht werden können.

Ferner wird vorgeschlagen, dass die Ausweichbewegung zumindest im Wesentlichen als eine Schwenkbewegung ausgebildet ist. Alternativ ist denkbar, dass die Ausweichbewegung als eine Translationsbewegung, insbesondere als eine zumindest im Wesentlichen parallel zu der Tragarmelementlängserstreckung des ersten Tragarmelements ausgerichtete Bewegung, ausgebildet ist. Unter einer "Schwenkbewegung" soll insbesondere eine Rotationsbewegung und/oder eine Drehbewegung um zumindest eine Schwenkachse verstanden werden. Insbesondere ist die Schwenkachse relativ zu zumindest einem die Schwenkachse aufweisenden Element, insbesondere dem ersten Tragarmelement, unbeweglich angeordnet. Unter der Wendung, dass die Ausweichbewegung "zumindest im Wesentlichen" als eine Schwenkbewegung ausgebildet ist, soll insbesondere verstanden werden, dass die Schwenkbewegung einen Radius mit einem Betrag aufweist, der um weniger als 40 %, insbesondere um weniger als 30 % und vorteilhaft um weniger als 20 % von einem Betrag eines Radius in einer Ausgangsstellung, insbesondere in einer Verstaustellung des Gegenstands, abweicht. Dadurch kann vorteilhaft ein großer Gegenstand an der Tragarmeinheit gelagert werden. Zudem kann der Gegenstand durch die Ausweichbewegung in einer vertikalen, vorzugsweise zumindest im Wesentlichen senkrecht zu zumindest einer Aufständerfläche eines Sitzes, an welchen insbesondere die Sitzanbauvorrichtung angebracht ist, Ausrichtung verstaut werden. Weiterhin kann vorteilhaft eine definierte, horizontale, vorzugsweise zumindest im Wesentlichen parallel zu der Aufständerfläche ausgerichtete, Bewegung des Gegenstands aus einer Verstauposition heraus erreicht werden.

Zudem wird vorgeschlagen, dass die Ausweichbewegungseinheit zumindest eine Kurvengetriebeeinheit umfasst, die dazu vorgesehen ist, die Ausweichbewegung des zweiten Tragarmelements an eine Bewegung des ersten Tragarmelements um die Gelenkachse zu koppeln. Alternativ ist denkbar, dass die Ausweichbewegungseinheit zumindest eine Kulissengetriebeeinheit umfasst, die dazu vorgesehen ist, die Ausweichbewegung des zweiten Tragarmelements an eine Bewegung des ersten Tragarmelements um die Gelenkachse zu koppeln. Dadurch kann vorteilhaft in einer sicheren, angenehmen Weise die Ausweichbewegung des zweiten Tragarmelements an die Bewegung des ersten Tragarmelements um die Gelenkachse gekoppelt werden. Zudem kann vorteilhaft eine sichere Funktionsweise, insbesondere der Sitzanbauvorrichtung, erreicht und ein mögliches Funktions- und/oder Komfortdefizit für einen Passagier vermieden werden. Weiterhin kann vorteilhaft der Gegenstand aufgrund einer einzigen, insbesondere von dem Passagier aufgebrachten, auf das erste Tragarmelement einwirkenden Bedienkraft bewegt werden, wobei zu einer Realisierung der Ausweichbewegung vorteilhaft eine, insbesondere von dem Passagier aufgebrachte, auf das erste Tragarmelement einwirkende Bedienkraft vermieden werden kann.

Weiterhin wird vorgeschlagen, dass die Kurvengetriebeeinheit zumindest ein Führungselement aufweist, das zumindest zu einem Großteil innerhalb, insbesondere zumindest eines Gehäuses, der Gelenkeinheit angeordnet und dazu vorgesehen ist, das zweite Tragarmelement bei der Ausweichbewegung, vorzugsweise indirekt, zu führen. Insbesondere weist das Führungselement zumindest eine Führungsoberfläche mit zumindest einem Oberflächenteilbereich auf, der in zumindest einem Bereich einen zumindest im Wesentlichen kreisförmigen Verlauf aufweist. Vorzugsweise weist die Führungsoberfläche zumindest einen Oberflächenteilbereich auf, der einen zumindest im Wesentlichen wellenförmigen Verlauf aufweist. Unter der Wendung, dass das Führungselement "zumindest zu einem Großteil innerhalb" der Gelenkeinheit angeordnet ist, soll insbesondere verstanden werden, dass das Führungselement zu einem Massenanteil und/oder zu einem Volumenanteil von mehr als 80 %, vorzugsweise von mehr als 90 % und insbesondere von mehr als 95 % innerhalb der Gelenkeinheit angeordnet ist. Unter der Wendung, dass das Führungselement zumindest zu einem Großteil "innerhalb" der Gelenkeinheit angeordnet ist, soll insbesondere verstanden werden, dass die Gelenkeinheit zumindest ein Gehäuse aufweist, das das Führungselement über einen Winkelbereich von mehr als 180°, insbesondere von mehr als 270°, vorteilhaft von mehr als300° und vorzugsweise von mehr als 330° umgibt, insbesondere umschließt. Dadurch kann vorteilhaft eine sichere, definierte Führung des zweiten Tragarmelements bei der Ausweichbewegung erreicht werden. Zudem kann vorteilhaft die Ausweichbewegung des zweiten Tragarmelements eine durch das Führungselement vorgegebene, vordefinierte Bahnkurve durchlaufen, wodurch eine gezielt steuerbare Ausweichbewegung erreicht werden kann.

Ferner wird vorgeschlagen, dass die Sitzanbauvorrichtung zumindest ein Sitzelement, das in Bezug auf das Führungselement zumindest im Wesentlichen unbeweglich angeordnet ist, aufweist. Unter einem "Sitzelement" soll insbesondere ein Element verstanden werden, das dazu vorgesehen ist, in dem Betriebszustand an zumindest einem Sitzbauteil angeordnet zu sein. Insbesondere ist das Sitzelement in dem Betriebszustand fest, vorteilhaft starr, vorzugsweise unbeweglich, an dem Sitzbauteil angeordnet. Insbesondere ist das Sitzbauteil als zumindest eine Armlehne ausgebildet. Alternativ ist denkbar, dass das Sitzbauteil als eine Rückenlehne und/oder insbesondere als ein Sitzboden und/oder als eine Aufständereinheit ausgebildet ist. Unter der Wendung, dass das Führungselement in Bezug auf das Sitzelement "zumindest im Wesentlichen unbeweglich" angeordnet ist, soll insbesondere verstanden werden, dass bei einer Bewegung des ersten Tragarmelements um die Gelenkachse sich in einer Zeitspanne von mehr als 1 s, insbesondere von mehr als 10 s und vorzugsweise von mehr als 60 s ein Abstand um weniger als 1 mm, insbesondere um weniger als 0,1 mm und vorzugsweise um weniger als 0,001 mm ändert. Vorteilhaft ändert sich bei einer Bewegung des ersten Tragarmelements um die Gelenkachse in einer Zeitspanne von mehr als 1 s, insbesondere von mehr als 10 s und vorzugsweise von mehr als 60 s eine Ausrichtung des Führungselements relativ zu dem Sitzelement um weniger als 1 °, insbesondere um weniger als 0,1° und vorzugsweise um weniger als 0,001 °. Dadurch kann vorteilhaft ein stabil und sicher angeordnetes Führungselement erreicht werden. Mittels eines derart angeordneten Führungselements kann vorteilhaft eine angenehme, funktionsfähige Führung bereitgestellt werden.

Zudem wird vorgeschlagen, dass die Kurvengetriebeeinheit zumindest ein Abtastelement aufweist, das dazu vorgesehen ist, eine Führungselementoberfläche zumindest des Führungselements abzutasten. Insbesondere ist das Führungselement dazu vorgesehen, das Abtastelement bei einer Bewegung des ersten Tragarmelements zu führen. Dadurch kann vorteilhaft die Führungselementoberfläche in einer präzisen, verlässlichen Weise abgetastet werden.

Weiterhin wird vorgeschlagen, dass die Ausweichbewegungseinheit zumindest eine Antriebseinheit aufweist, die dazu vorgesehen ist, zumindest eine Antriebskraft zu einem Antrieb des zweiten Tragarmelements zu bewirken. Unter einer "Antriebseinheit" soll insbesondere eine Einheit verstanden werden, die dazu vorgesehen ist, mittels der Antriebskraft die Ausweichbewegung des zweiten Tragarmelements zu bewirken. Beispielsweise umfasst die Antriebseinheit zumindest einen Elektromotor, insbesondere einen Aktor, zu der Erzeugung der Antriebskraft. Vorzugsweise ist die Antriebseinheit dazu vorgesehen, die Antriebskraft mechanisch zu bewirken. Beispielsweise umfasst die Antriebseinheit zumindest ein Zahnradgetriebe zur Erzeugung der mechanischen Antriebskraft. Insbesondere ist die Antriebseinheit zumindest zu einem Großteil innerhalb von dem ersten Tragarmelement gelagert. Vorzugsweise weist das erste Tragarmelement zumindest ein Gehäuse auf, das die Antriebseinheit über einen Winkelbereich von mehr als 180°, insbesondere von mehr als 270°, vorteilhaft von mehr als300° und vorzugsweise von mehr als 330° umgibt, insbesondere umschließt. Dadurch kann vorteilhaft das zweite Tragarmelement in einer verlässlichen, funktionsstörungsarmen Weise mittels der Antriebskraft angetrieben werden. Zudem kann vorteilhaft eine insbesondere geräuscharm und vorzugsweise störungsarm erzeugte Antriebskraft erreicht werden, insbesondere in einem Vergleich mit einer Erzeugung der Antriebskraft mittels eines Elektromotors.

Ferner wird vorgeschlagen, dass die Antriebseinheit zumindest ein Federelement aufweist. Insbesondere ist das Federelement als eine Druckfeder ausgebildet. Alternativ ist denkbar, dass das Federelement als eine Blattfeder und/oder als eine Torsionsfeder ausgebildet ist. Dadurch kann vorteilhaft die eine verlässliche Antriebskraft bewirkt werden.

Zudem wird vorgeschlagen, dass die Ausweichbewegungseinheit zumindest eine Getriebeeinheit aufweist, die dazu vorgesehen ist, zumindest eine Dynamik des ersten Tragarmelements in zumindest eine andersartige Dynamik des zweiten Tragarmelements umzuwandeln. Beispielsweise ist das Getriebe als ein Getriebe mit elektro-technischen Bauteilen ausgebildet. Ebenfalls denkbar ist, dass das Getriebe als ein Strömungsgetriebe und/oder als ein hydraulisches Getriebe ausgebildet ist. Insbesondere ist das Getriebe als ein mechanisches Getriebe ausgebildet. Insbesondere ist die Dynamik zumindest eines der Tragarmelemente zumindest als eine Bewegungskenngröße wie beispielsweise zumindest eine Bewegungsrichtung, eine Bewegungsart, ein Betrag zumindest einer Bewegung eines der Tragarmelemente und/oder eine auf eines der Tragarmelemente einwirkende Kraft ausgebildet. Vorteilhaft ist die Bewegungsart als eine Art und/oder Form einer Bewegung ausgebildet, wie beispielsweise eine Rotationsbewegung, eine Schwenkbewegung, eine Translationsbewegung, eine Wellenbewegung und/oder eine periodische Bewegung ausgebildet. Vorteilhaft ist die Kraft als eine Art und/oder Form einer Kraft ausgebildet, wie beispielsweise eine Zugkraft, eine Druckkraft, eine Rotationskraft, eine Scherkraft und/oder eine periodische Kraft ausgebildet. Unter "andersartig" soll insbesondere verschieden, differierend, unterschiedlich und/oder abweichend verstanden werden. Zudem soll unter der Wendung, dass die Getriebeeinheit dazu vorgesehen ist, zumindest eine Dynamik des ersten Tragarmelements in zumindest eine "andersartige" Dynamik des zweiten Tragarmelements umzuwandeln, insbesondere verstanden werden, dass sich die Dynamik des ersten Tragarmelements von der Dynamik des zweiten Tragarmelements in zumindest einer Kenngröße, insbesondere in zumindest einer Bewegungskenngröße, unterscheiden. Insbesondere ist die Kurvengetriebeeinheit dazu vorgesehen, zumindest eine Form des Führungselements mittels des Abtastelements, beispielsweise direkt, vorteilhaft indirekt, vorzugsweise mittels der Getriebeeinheit, an den Gegenstand weiterzuleiten. Dadurch kann vorteilhaft eine Umwandlung zwischen zwei andersartigen Dynamiken erreicht werden. Zudem kann durch eine Verwendung verschiedener Dynamiken vorteilhaft eine hohe Flexibilität erreicht werden.

Weiterhin wird vorgeschlagen, dass die Getriebeeinheit zu einer Umwandlung einer Linearbewegung des Abtastelements in eine Schwenkbewegung des zweiten Tragarmelements vorgesehen ist. Dadurch kann vorteilhaft eine mittels des Führungselements vorgegebene Bahnkurve des Abtastelements zu einer Erzeugung der Schwenkbewegung des zweiten Tragarmelements verwendet werden, wodurch eine gezielte, komfortable Ausweichbewegung erreicht werden kann.

Ferner wird vorgeschlagen, dass die Ausweichbewegungseinheit zu einer Umwandlung zumindest einer Kraft der Antriebseinheit, vorzugsweise des Federelements, in zumindest eine andersartige Kraft des Abtastelements vorgesehen ist. Vorzugsweise ist die Ausweichbewegungseinheit zu einer Umwandlung zumindest einer Druckkraft der Antriebseinheit, vorzugsweise des Federelements, in zumindest eine Zugkraft des Abtastelements vorgesehen. Dadurch kann vorteilhaft gezielt die Ausweichbewegung des zweiten Tragarmelements eingeleitet werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Sitz mit einer erfindungsgemäßen Sitzanbauvorrichtung in einer schematischen Seitenansicht, wobei ein mittels einer Tragarmeinheit an dem Sitz angebrachter Gegenstand in mehreren Bewegungsstellungen angeordnet ist,
- Fig. 2: eine Innenansicht der Tragarmeinheit aus Fig. 1 in einer als Verstaustellung bezeichneten Bewegungsstellung und
- Fig. 3: eine Innenansicht der Tragarmeinheit aus Fig. 1 in einer Bewegungsstellung während einer Bewegung des Gegenstands.

### Beschreibung des Ausführungsbeispiels

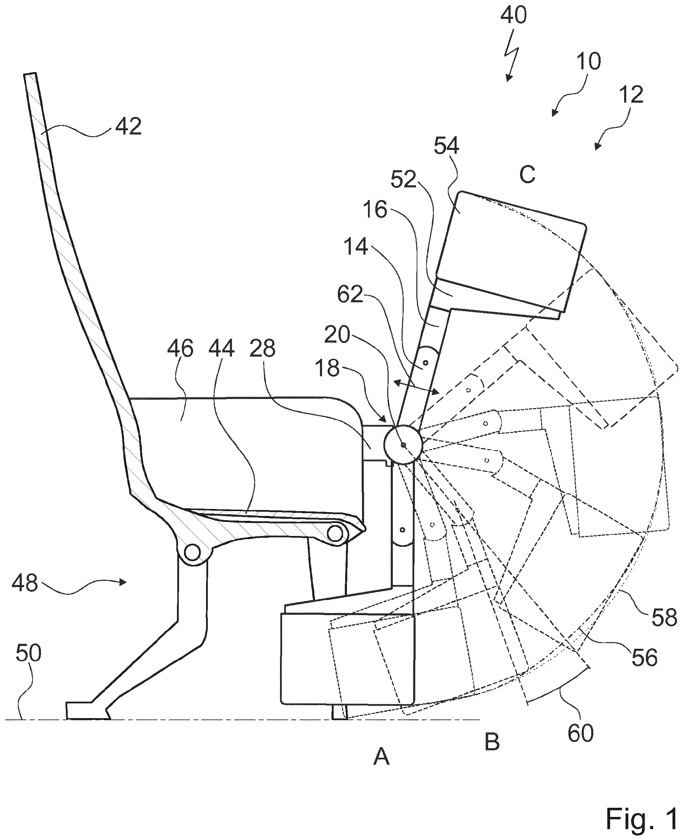

Fig. 1 zeigt einen erfindungsgemäßen Sitz 40, der als ein Fahrzeugsitz ausgebildet ist, mit einer erfindungsgemäßen Sitzanbauvorrichtung 10, die als eine Fahrzeugsitzanbauvorrichtung ausgebildet ist, in einer schematischen Seitenansicht. Der Sitz 40 umfasst eine Rückenlehne 42 sowie einen Sitzboden 44. Zudem umfasst der Sitz 40 zwei Armlehnen 46, die an zwei einander gegenüberliegenden Seiten der Rückenlehne 42 sowie des Sitzbodens 44 angeordnet sind. Der Sitz 40 weist eine Aufständereinheit 48 auf, die dazu vorgesehen ist, den Sitz 40 auf einer Aufständerfläche 50 aufzuständern. Im vorliegenden Ausführungsbeispiel ist die Aufständerfläche 50 als ein Boden eines Flugzeugs ausgebildet. Der Sitz 40 ist als ein Flugzeugsitz ausgebildet. Die Sitzanbauvorrichtung 10 ist als eine Flugzeugsitzanbauvorrichtung ausgebildet.

Die Sitzanbauvorrichtung 10 umfasst eine Tragarmeinheit 12, die ein erstes Tragarmelement 14, ein zweites Tragarmelement 16 und eine Gelenkeinheit 18 aufweist. Das erste Tragarmelement 14 ist zwischen der Gelenkeinheit 18 und dem zweiten Tragarmelement 16 angeordnet. Die Gelenkeinheit 18 weist eine Gelenkachse 20 auf und ist dazu vorgesehen, das erste Tragarmelement 14 schwenkbar um die Gelenkachse 20 zu lagern. Die Sitzanbauvorrichtung 10 umfasst ein Sitzelement 28, das dazu vorgesehen ist, die Tragarmeinheit 12 an der Armlehne 46 zu befestigen. Zudem umfasst die Sitzanbauvorrichtung 10 ein Gegenstandshalteelement 52 sowie einen Gegenstand 54, der als ein Monitor ausgebildet ist. Das Gegenstandshalteelement 52, das zu einer Befestigung des Gegenstands 54 vorgesehen ist, ist an einem dem ersten Tragarmelement 14 abweisenden Ende des zweiten Tragarmelements 16 angeordnet. Der Gegenstand 54 ist in Fig. 1 in mehreren Bewegungsstellungen dargestellt, wobei lediglich eine als Gebrauchsstellung C bezeichnete Bewegungsstellung mit Bezugszeichen versehen ist.

Die Tragarmeinheit 12 weist eine Ausweichbewegungseinheit 22 auf, die dazu vorgesehen ist, das erste Tragarmelement 14 und das zweite Tragarmelement 16 bewegungstechnisch miteinander zu koppeln. Zudem ist die Tragarmeinheit 12 dazu vorgesehen, eine Ausweichbewegung des zweiten Tragarmelements 16 relativ zu dem ersten Tragarmelement 14 zu erzeugen. Ein von dem ersten Tragarmelement 14 abweisendes Ende des Gegenstands 54 durchläuft aufgrund der Ausweichbewegung bei einer Schwenkbewegung des ersten Tragarmelements 14 um die Gelenkachse 20 eine Bahnkurve 56. Die Bahnkurve 56 weicht bei der Ausweichbewegung von einer gedachten Bahnkurve 58 des Endes des Gegenstands 54 bei einem starr mit dem ersten Tragarmelement 16 verbundenen zweiten Tragarmelement 16 ab. Die Ausweichbewegung ist als eine Schwenkbewegung ausgebildet. Die Ausweichbewegungseinheit 22 ist dazu vorgesehen, mittels der Ausweichbewegung eine Auslenkung des zweiten Tragarmelements 16 relativ zu dem ersten Tragarmelement 14 um einen Ausweichwinkel 60 zu bewirken. Der Ausweichwinkel 60 nimmt bei der Schwenkbewegung des ersten Tragarmelements 14 um die Gelenkachse 20 Werte zwischen 0° und 20° an. In einer Bevegungsstellung B beträgt der Ausweichwinkel 60 20°.

Um den Gegenstand 54 zwischen einer als Verstaustellung A bezeichneten Bewegungsstellung und der Gebrauchsstellung C zu bewegen, ist eine auf das erste Tragarmelement 14 einwirkende Bedienkraft 62 nötig. Eine zusätzliche, auf das zweite Tragarmelement 16 einwirkende, Bedienkraft ist nicht nötig. Die Bedienkraft 62 ist bei einer Bewegung des Gegenstands 54 aus der Verstaustellung A in die Gebrauchsstellung C als eine Zugkraft ausgebildet. Bei einer Bewegung des Gegenstands 54 aus der Gebrauchsstellung C in die Verstaustellung A ist die Bedienkraft 62 als eine Druckkraft ausgebildet.

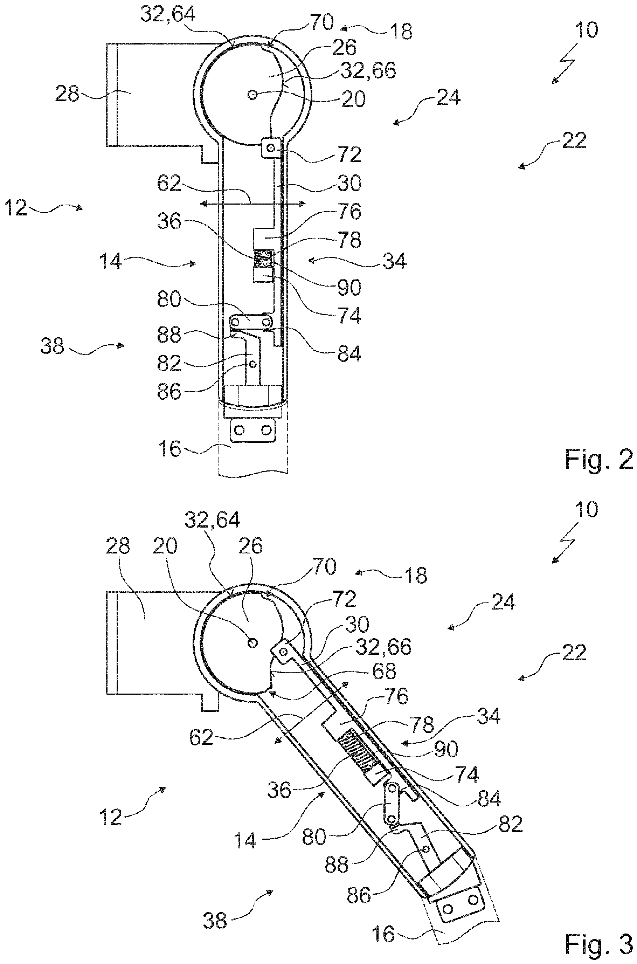

Fig. 2 zeigt eine Innenansicht der Tragarmeinheit 12 aus Fig. 1 in der Verstaustellung A. In Fig. 3 ist eine Innenansicht der Tragarmeinheit 12 aus Fig. 1 in der Bewegungsstellung B während der Bewegung des Gegenstands 54 dargestellt. Die folgende Beschreibung stützt sich auf eine kombinierte Betrachtung der Fig. 2 und Fig. 3. Die Ausweichbewegungseinheit 22 umfasst eine Kurvengetriebeeinheit 24, die dazu vorgesehen ist, die Ausweichbewegung des zweiten Tragarmelements 16 an eine Bewegung des ersten Tragarmelements 14 um die Gelenkachse 20 zu koppeln. Die Kurvengetriebeeinheit 24 ist in der Gelenkeinheit 18 sowie in dem ersten Tragarmelement 14 angeordnet. Die Kurvengetriebeeinheit 24 weist ein Führungselement 26 auf, das innerhalb der Gelenkeinheit 18 angeordnet ist. Das Führungselement 26 ist in Bezug auf das Sitzelement 28 unbeweglich angeordnet. Das Führungselement 26 weist eine Führungselementoberfläche 32 auf, die bei einer Betrachtung in einer Querschnittsebene zwei Oberflächenteilbereiche 64, 66 mit differierender Geometrie umfasst. Eine Geometrie des in dem Betriebszustand dem Sitzelement 28 zuweisenden Oberflächenteilbereichs 64 ist kreisförmig ausgebildet. Eine Geometrie des in dem Betriebszustand dem Sitzelement 28 abweisenden Oberflächenteilbereichs 64 ist wellenförmig ausgebildet. Die Gelenkachse 20 ist innerhalb des Führungselements 26 angeordnet. Die Gelenkachse 20 ist bei einer gedachten Verlängerung der kreisförmigen Geometrie des Oberflächenteilbereichs 64 zu einem Vollkreis in einem Mittelpunkt des Führungselements 26 angeordnet. Die Kurvengetriebeeinheit 24 umfasst zwei Halteelemente 68, 70, die jeweils dazu vorgesehen sind, den Gegenstand 54 in einer jeweiligen Bewegungsstellung zu halten. Das Halteelement 68 ist dazu vorgesehen, den Gegenstand 54 in der Verstaustellung A zu halten. Das Halteelement 70 ist dazu vorgesehen, den Gegenstand 54 in der Gebrauchsstellung C zu halten. Die Halteelemente 68, 70 sind als Ausnehmungen in dem Führungselement 26 ausgebildet.

Die Kurvengetriebeeinheit 24 weist ein Abtastelement 30 auf, das dazu vorgesehen ist, die Führungselementoberfläche 32 des Führungselements 26 abzutasten. Das Führungselement 26 ist dazu vorgesehen, das zweite Tragarmelement 16 bei der Ausweichbewegung zu führen. Hierbei ist das Führungselement 26 dazu vorgesehen, das zweite Tragarmelement 14 mittels des Abtastelements 30 bei der Ausweichbewegung zu führen. Das Abtastelement 30 umfasst ein Tastmittel 72 zu einem Abtasten der Führungselementoberfläche 32. Das Abtastelement 30 ist als ein Schieber und im Wesentlichen stabförmig ausgebildet. Das Abtastelement 30 ist in der Verstaustellung A innerhalb der ersten Tragarmelements 14 angeordnet, wobei das Abtastelement 30 eine Abtastelementlängserstreckung mit einem Betrag von etwa 75 % eines Betrags einer Tragarmelementlängserstreckung des ersten Tragarmelements 14 aufweist.

Die Ausweichbewegungseinheit 22 weist eine Antriebseinheit 34 auf, die dazu vorgesehen ist, eine Antriebskraft zu einem Antrieb des zweiten Tragarmelements 16 zu bewirken. Die Antriebseinheit 34 umfasst ein Antriebselement 74, das als ein Abstützelement ausgebildet ist. Das Antriebselement 74 ist fest mit dem ersten Tragarmelement 14 verbunden und bezüglich des ersten Tragarmelements 14 unbeweglich angeordnet. Das Antriebselement 74 ist dazu vorgesehen, eine Anlagefläche 90 für ein Federelement 36 auszubilden. Die Antriebseinheit 34 weist das Federelement 36, das als eine Druckfeder ausgebildet ist, auf. Das Federelement 36 ist in dem Betriebszustand zwischen dem Antriebselement 74 und dem Abtastelement 30 angeordnet. Das Abtastelement 30 weist einen Abtastelementvorsprung 76 auf, der als eine Anlagefläche 78 für das Federelement 36 ausgebildet ist. Das Federelement 36 ist in dem Betriebszustand in einem gespannten Zustand angeordnet. Hierbei übt das Federelement 36 eine Kraft auf das Abtastelement 30 aus. Das Federelement 36 ist dazu vorgesehen, mittels der Kraft das Abtastelement 30 in Richtung auf das Führungselement 26 zu pressen. Zudem ist das Federelement 36 dazu vorgesehen, mittels der Kraft eine Anpresskraft zwischen dem Abtastelement 30 und der Führungselementoberfläche 32 zu erzeugen. In der Verstaustellung A sowie in der Gebrauchsstellung C ist das Federelement 36 dazu vorgesehen, das Abtastelement 30 in das jeweilige Halteelement 68, 70 zu pressen. Das Federelement 36 ist dazu vorgesehen, bei der Schwenkbewegung des ersten Tragarmelements 14 um die Gelenkachse 20 das Abtastelement 30 gegen die Führungselementoberfläche 32 zu pressen.

Die Ausweichbewegungseinheit 22 weist eine Getriebeeinheit 38 auf, die dazu vorgesehen ist, eine Dynamik des ersten Tragarmelements 14 in eine andersartige Dynamik des zweiten Tragarmelements 16 umzuwandeln. Die Getriebeeinheit 38 umfasst zwei Getriebeelemente 80, 82, die schwenkbar miteinander verbunden sind. Das Getriebeelement 80 ist dazu vorgesehen, das Getriebeelement 82 und das Abtastelement 30 miteinander zu verbinden. Das Getriebeelement 80 ist schwenkbar an einem weiteren Abtastelementvorsprung 84 angebracht. Ein dem Abtastelement 30 abweisendes Ende des Getriebeelements 80 ist schwenkbar mit einem dem Abtastelement 30 abweisenden Ende eines Getriebeelementstegs 88 des Getriebeelements 82 verbunden. Das Getriebeelement 82 weist zu einer Anbindung an das Getriebeelement 80 den Getriebeelementsteg 88 auf, der in eine von dem Abtastelement 30 abweisende Richtung ausgerichtet ist. Somit ist eine Anbindung des Getriebeelements 80 an das Abtastelement 30 auf einer ersten Seite des ersten Tragarmelements 14 und eine Anbindung des Getriebeelements 80 an das Getriebeelement 82 auf einer der ersten Seite gegenüberliegenden zweiten Seite des ersten Tragarmelements 14 angeordnet.

Das Getriebeelement 82 ist an einem Drehpunkt 86 fest mit dem ersten Tragarmelement 14 verbunden. Der Drehpunkt 86 ist in Bezug auf das erste Tragarmelement 14 unbeweglich angeordnet. Das Getriebeelement 82 ist schwenkbar um den Drehpunkt 86 gelagert. Das Getriebeelement 82 ist dazu vorgesehen, das erste Tragarmelement 14 und das zweite Tragarmelement 16 miteinander zu koppeln. Das Getriebeelement 82 ist an einem dem Getriebeelement 80 abweisenden Ende fest mit dem zweiten Tragarmelement 16 verbunden. Die erste Seite des Tragarmelements 14 und die zweite Seite des Tragarmelements 14 sind auf einander gegenüberliegenden Seiten des Drehpunkts 86 angeordnet.

Vorgesehen ist ein Verfahren zu einer Betätigung der Sitzanbauvorrichtung 10, bei dem eine Ausweichbewegung des zweiten Tragarmelements 16 relativ zum ersten Tragarmelement 14 durch die Ausweichbewegungseinheit 22 erzeugt wird. In einem ersten Verfahrensschritt wird von einem Passagier eine Bedienkraft 62 auf das erste Tragarmelement 14 ausgeübt. Diese Bedienkraft 62 auf das erste Tragarmelement 14 ist während der gesamten Schwenkbewegung des ersten Tragarmelements 14 um die Gelenkachse 20 nötig. Aufgrund der Bedienkraft 62 wird der Gegenstand 54 zwischen den Bewegungsstellungen A, C bewegt. Das Abtastelement 30 ist dazu vorgesehen, mittels der Bedienkraft 62 aus dem Halteelement 68, 70 bewegt zu werden. Bei der Schwenkbewegung des ersten Tragarmelements 14 um die Gelenkachse 20 ist das Federelement 36 dazu vorgesehen, das Abtastelement 30 gegen die Führungselementoberfläche 32 zu drücken. Die von dem Federelement 36 ausgeübte Kraft ist als eine Druckkraft ausgebildet. Das Abtastelement 30 ist dazu vorgesehen, sich bei der Schwenkbewegung des ersten Tragarmelements 14 von einem der Halteelemente 68, 70 entlang der wellenförmigen Führungselementoberfläche 32 zu dem anderen der Halteelemente 70, 68 zu bewegen.

Bei der Bewegung des Gegenstands 54 aus der Verstaustellung A in die Gebrauchsstellung C bewegt sich das Abtastelement 30 in Richtung des Führungselements 26 weiter in die Gelenkeinheit 18 hinein. Somit bewegt sich das Abtastelement 30 bei der Bewegung des Gegenstands 54 aus der Verstaustellung A in die Gebrauchsstellung C weiter aus dem ersten Tragarmelement 14 heraus. Das Abtastelement 30 ist dazu vorgesehen, bei der Bewegung des Gegenstands 54 aus der Verstaustellung A in die Gebrauchsstellung C eine Zugkraft in Richtung des Führungselements 26 zu erzeugen. Zudem ist das Abtastelement 30 dazu vorgesehen, bei der Bewegung des Gegenstands 54 aus der Verstaustellung A in die Gebrauchsstellung C die Zugkraft auf die Getriebeeinheit 38 auszuüben. Die Druckkraft des Federelements 36 wird bei der Bewegung des Gegenstands 54 aus der Verstaustellung A in die Gebrauchsstellung C in eine Zugkraft des Abtastelements 30 umgewandelt. Die Ausweichbewegungseinheit 22 ist zu der Umwandlung einer Kraft des Federelements 36 in eine andersartige Kraft des Abtastelements 30 vorgesehen.

Das Abtastelement 30 ist dazu vorgesehen, mittels der Zugkraft das Getriebeelement 80 in Richtung des Führungselements 26 zu ziehen. Das Getriebeelement 80 ist zu einer Weiterleitung der Zugkraft des Abtastelements 30 an das Getriebeelement 82 vorgesehen. Das Getriebeelement 82 ist um den Drehpunkt 86 schwenkbar gelagert. Die Getriebeeinheit 38 ist dazu vorgesehen, ein Drehmoment zu erzeugen. Das Abtastelement 30 ist dazu vorgesehen, den Getriebeelementsteg 88 mittels des Getriebeelements 80 von der zweiten Seite in Richtung der ersten Seite zu ziehen. Das Getriebeelement 82 ist dazu vorgesehen, die Bewegung des Getriebeelementstegs 88 in Richtung der ersten Seite in eine Bewegung des dem Getriebeelementsteg 88 abweisenden Ende des Getriebeelements 82 in eine der Richtung entgegengesetzte Gegenrichtung umzuwandeln. Das Getriebeelement 82 ist aufgrund der festen Verbindung des dem Getriebeelement 80 abweisenden Ende des Getriebeelements 82 mit dem zweiten Tragarmelement 16 zu einer Erzeugung einer Schwenkbewegung des zweiten Tragarmelements 16 vorgesehen. Die Getriebeeinheit 38 ist zu einer Umwandlung einer Linearbewegung des Abtastelements 30 in eine Schwenkbewegung des zweiten Tragarmelements 16 vorgesehen.

### Bezugszeichen

- 10: Sitzanbauvorrichtung
- 12: Tragarmeinheit
- 14: Erstes Tragarmelement
- 16: Zweites Tragarmelement
- 18: Gelenkeinheit
- 20: Gelenkachse
- 22: Ausweichbewegungseinheit
- 24: Kurvengetriebeeinheit
- 26: Führungselement
- 28: Sitzelement
- 30: Abtastelement
- 32: Führungselementoberfläche
- 34: Antriebseinheit
- 36: Federelement
- 38: Getriebeeinheit
- 40: Sitz
- 42: Rückenlehne
- 44: Sitzboden
- 46: Armlehne
- 48: Aufständereinheit
- 50: Aufständerfläche
- 52: Gegenstandshalteelement
- 54: Gegenstand
- 56: Bahnkurve
- 58: Gedachte Bahnkurve
- 60: Ausweichwinkel
- 62: Bedienkraft
- 64: Oberflächenteilbereich
- 66: Oberflächenteilbereich
- 68: Halteelement
- 70: Halteelement
- 72: Tastmittel
- 74: Antriebselement
- 76: Abtastelementvorsprung
- 78: Anlagefläche
- 80: Getriebeelement
- 82: Getriebeelement
- 84: Weiterer Abtastelementvorsprung
- 86: Drehpunkt
- 88: Getriebeelementsteg
- 90: Anlagefläche

## Patentansprüche

1. Sitzanbauvorrichtung mit zumindest einer Tragarmeinheit (12), die zumindest ein erstes Tragarmelement (14), zumindest ein zweites Tragarmelement (16) und zumindest eine Gelenkeinheit (18) aufweist, die dazu vorgesehen ist, das erste Tragarmelement (14) schwenkbar um zumindest eine Gelenkachse (20) zu lagern, wobei die Tragarmeinheit (12) zumindest eine Ausweichbewegungseinheit (22) aufweist, die zur Erzeugung einer Ausweichbewegung des zweiten Tragarmelements (16) relativ zum ersten Tragarmelement (14) dazu vorgesehen ist, das erste Tragarmelement (14) und das zweite Tragarmelement (16) bewegungstechnisch miteinander zu koppeln, **dadurch gekennzeichnet, dass** die Ausweichbewegungseinheit dazu vorgesehen ist bei einer Abwesenheit einer auf das zweite Tragarmelement (16) einwirkenden Bedienkraft die Ausweichbewegung des zweiten Tragarmelements (16) zu erzeugen.

2. Sitzanbauvorrichtung nach Anspruch 1,
**dadurch gekennzeichnet, dass**
die Ausweichbewegung zumindest im Wesentlichen als eine Schwenkbewegung ausgebildet ist.

3. Sitzanbauvorrichtung nach einem der vorhergehenden Ansprüche,
**dadurch gekennzeichnet, dass**
die Ausweichbewegungseinheit (22) zumindest eine Kurvengetriebeeinheit (24) umfasst, die dazu vorgesehen ist, die Ausweichbewegung des zweiten Tragarmelements (16) an eine Bewegung des ersten Tragarmelements (14) um die Gelenkachse (20) zu koppeln.

4. Sitzanbauvorrichtung nach Anspruch 3,
**dadurch gekennzeichnet, dass**
die Kurvengetriebeeinheit (24) zumindest ein Führungselement (26) aufweist, das zumindest zu einem Großteil innerhalb der Gelenkeinheit (18) angeordnet und dazu vorgesehen ist, das zweite Tragarmelement (16) bei der Ausweichbewegung zu führen.

5. Sitzanbauvorrichtung nach Anspruch 4,
**gekennzeichnet durch**
zumindest ein Sitzelement (28), das in Bezug auf das Führungselement (26) zumindest im Wesentlichen unbeweglich angeordnet ist.

6. Sitzanbauvorrichtung zumindest nach den Ansprüchen 3 und 4,
**dadurch gekennzeichnet, dass**
die Kurvengetriebeeinheit (24) zumindest ein Abtastelement (30) aufweist, das dazu vorgesehen ist, eine Führungselementoberfläche (32) zumindest des Führungselements (26) abzutasten.

7. Sitzanbauvorrichtung nach einem der vorhergehenden Ansprüche,
**dadurch gekennzeichnet, dass**
die Ausweichbewegungseinheit (22) zumindest eine Antriebseinheit (34) aufweist, die dazu vorgesehen ist, zumindest eine Antriebskraft zu einem Antrieb des zweiten Tragarmelements (16) zu bewirken.

8. Sitzanbauvorrichtung nach Anspruch 7,
**dadurch gekennzeichnet, dass**
die Antriebseinheit (34) zumindest ein Federelement (36) aufweist.

9. Sitzanbauvorrichtung zumindest nach einem der vorhergehenden Ansprüche,
**dadurch gekennzeichnet, dass**
die Ausweichbewegungseinheit (22) zumindest eine Getriebeeinheit (38) aufweist, die dazu vorgesehen ist, zumindest eine Dynamik des ersten Tragarmelements (14) in zumindest eine andersartige Dynamik des zweiten Tragarmelements (16) umzuwandeln.

10. Sitzanbauvorrichtung zumindest nach den Ansprüchen 6 und 9,
**dadurch gekennzeichnet, dass**
die Getriebeeinheit (38) zu einer Umwandlung einer Linearbewegung des Abtastelements (30) in eine Schwenkbewegung des zweiten Tragarmelements (16) vorgesehen ist.

11. Sitzanbauvorrichtung zumindest nach den Ansprüchen 6 und 8,
**dadurch gekennzeichnet, dass**
die Ausweichbewegungseinheit (22) zu einer Umwandlung zumindest einer Kraft des Federelements (36) in zumindest eine andersartige Kraft des Abtastelements (30) vorgesehen ist.

12. Sitz mit einer Sitzanbauvorrichtung (10) nach einem der Ansprüche 1 bis 11.

13. Verfahren zu einer Betätigung einer Sitzanbauvorrichtung (10) nach einem der Ansprüche 1 bis 11, bei dem eine Ausweichbewegung des zweiten Tragarmelements (16) relativ zum ersten Tragarmelement (14) durch die Ausweichbewegungseinheit (22) erzeugt wird.

## Claims

1. Seat attachment device with at least one carrier arm unit (12) comprising at least one first carrier arm element (14), at least one second carrier arm element (16) and at least one articulation unit (18), which is configured to support the first carrier arm element (14) pivotally about at least one articulation axis (20), wherein
the carrier arm unit (12) comprises at least one evasive-movement unit (22) which is configured, for generating an evasive movement of the second carrier arm element (16) with respect to the first carrier arm element (14), to couple the first carrier arm element (14) and the second carrier arm element (16) with each other in a motionally dependent manner,
**characterised in that**
the evasive-movement unit (22) is configured to generate the evasive movement of the second carrier arm element (16) in case of an absence of an actuating force acting onto the second carrier arm element (16).

2. Seat attachment device according to claim 1,
**characterised in that**
the evasive movement is realized at least substantially as a pivotal movement.

3. Seat attachment device according to one of the preceding claims,
**characterised in that**
the evasive-movement unit (22) comprises at least one cam gear unit (24), which is configured to couple the evasive movement of the second carrier arm element (16) to a movement of the first carrier arm element (14) about the articulation axis (20).

4. Seat attachment device according to claim 3,
**characterised in that**
the cam gear unit (24) comprises at least one guiding element (26), which is arranged, at least to a large part, within the articulation unit (18) and is configured for guiding the second carrier arm element (16) in the evasive movement.

5. Seat attachment device according to claim 4,
**characterised by**
at least one seat element (28) which is arranged at least substantially immobile with respect to the guiding element (26).

6. Seat attachment device at least according to claims 3 and 4,
**characterised in that**
the cam gear unit (24) comprises at least one scan element (30), which is configured to scan a guiding element surface (32) at least of the guiding element (26).

7. Seat attachment device according to one of the preceding claims,
**characterised in that**
the evasive-movement unit (22) comprises at least one drive unit (34), which is configured to generate at least one drive force for driving the second carrier arm element (16).

8. Seat attachment device according to claim 7,
**characterised in that**
the drive unit (34) comprises at least one spring element (36).

9. Seat attachment device according to one of the preceding claims,
**characterised in that**
the evasive-movement unit (22) comprises at least one gear unit (38), which is configured to convert at least a dynamic of the first carrier arm element (14) at least into a different dynamic of the second carrier element (16).

10. Seat attachment device at least according to claims 6 and 9,
**characterised in that**
the gear unit (38) is configured for converting a linear movement of the scan element (30) into a pivotal movement of the second carrier arm element (16).

11. Seat attachment device at least according to claims 6 and 8,
**characterised in that**
the evasive-movement unit (22) is configured for converting at least a force of the spring element (36) into at least one different force of the scan element (30).

12. Seat with a seat attachment device (10) according to one of claims 1 to 11.

13. Method for operating a seat attachment device (10) according to one of claims 1 to 11, wherein an evasive movement of the second carrier arm element (16) relative to the first carrier arm element (14) is generated by the evasive movement unit (22).

## Revendications

1. Dispositif de montage sur un siège, avec au moins une unité à bras porteur (12) comprenant au moins un premier élément de bras porteur (14), au moins un deuxième élément de bras porteur (16) et au moins une unité articulée (18) prévue à supporter le premier élément de bras porteur (14) de manière pivotable autour d'au moins un axe articulé (20),
l'unité à bras porteur (12) comprenant au moins une unité de mouvement esquivant (22), laquelle est prévue, pour générer un mouvement esquivant du deuxième élément de bras porteur (16) par rapport au premier élément de bras porteur (14), à coupler le premier élément de bras porteur (14) et le deuxième élément de bras porteur (16) l'un avec l'autre de manière dépendant de mouvement,
**caractérisé en ce que**
l'unité de mouvement esquivant (22) est prévue à générer, en cas d'une absence d'une force actionneur agissant sur le deuxième élément de bras porteur (16), le mouvement esquivant du deuxième élément de bras porteur (16).

2. Dispositif de montage sur un siège selon la revendication 1,
**caractérisé en ce que**
le mouvement esquivant est réalisé au moins sensiblement comme mouvement pivotant.

3. Dispositif de montage sur un siège selon l'une quelconque des revendications précédentes,
**caractérisé en ce que**
l'unité de mouvement esquivant (22) comporte au moins une unité d'entraînement à cames (24) prévue à raccorder le mouvement esquivant du deuxième élément de bras porteur (16) à un mouvement du premier élément de bras porteur (14) autour de l'axe articulé (20).

4. Dispositif de montage sur un siège selon la revendication 3,
**caractérisé en ce que**
l'unité d'entraînement à cames (24) comporte au moins un élément de guidage (26), lequel est disposé au moins d'un grand part dans l'unité articulée (18) et est prévu à guider le deuxième élément de bras porteur (16) en le mouvement esquivant.

5. Dispositif de montage sur un siège selon la revendication 4,
**caractérisé par**
au moins un élément de siège (28) disposé de façon au moins sensiblement immobile par rapport à l'élément de guidage (26).

6. Dispositif de montage sur un siège au moins selon les revendications 3 et 4,
**caractérisé en ce que**
l'unité d'entraînement à cames (24) comporte au moins un élément de balayage (30) prévu à balayer une surface d'élément de guidage (32) au moins de l'élément de guidage (26).

7. Dispositif de montage sur un siège selon l'une quelconque des revendications précédentes,
**caractérisé en ce que**
l'unité de mouvement esquivant (22) comporte au moins une unité d'entraînement (34), laquelle est prévue à produire au moins une force d'entraînement pour le bût d'un entraînement du deuxième élément de bras porteur (16).

8. Dispositif de montage sur un siège selon la revendication 7,
**caractérisé en ce que**
l'unité d'entraînement (34) comporte au moins un élément de ressort (36).

9. Dispositif de montage sur un siège selon l'une quelconque des revendications précédentes,
**caractérisé en ce que**
l'unité de mouvement esquivant (22) comporte au moins une unité d'engrenage (38), laquelle est prévue à convertir au moins une dynamique du premier élément de bras porteur (14) dans au moins une dynamique différente du deuxième élément de bras porteur (16).

10. Dispositif de montage sur un siège au moins selon les revendications 6 et 9,
**caractérisé en ce que**
l'unité d'engrenage (38) est configurée pour convertir un mouvement linéaire de l'élément de balayage (30) dans un mouvement pivotant du deuxième élément de bras porteur (16).

11. Dispositif de montage sur un siège au moins selon les revendications 6 et 8,
**caractérisé en ce que**
l'unité de mouvement esquivant (22) est prévue pour convertir au moins une force de l'élément de ressort (36) dans au moins une force différente de l'élément de balayage (30).

12. Siège avec un dispositif de montage sur un siège (10) selon l'une quelconque des revendications 1 à 11.

13. Procédé pour opérer un dispositif de montage sur un siège (10) selon l'une quelconque des revendications 1 à 11, dans lequel un mouvement esquivant du deuxième élément de bras porteur (16) relativement au premier élément de bras porteur (14) est généré par l'unité de mouvement esquivant (22).
